# EUROPEAN PATENT SPECIFICATION

(11) **EP 2 719 608 B1**
(45) Date of publication and mention of the grant of the patent: **21.01.2015**
(21) Application number: 12187767.4
(22) Date of filing: 09.10.2012
(51) Int. Cl.: B62J 1/08

(54) **Clamping apparatus for a saddle of a bicycle**
Spannvorrichtung für Fahrradsattel
Dispositif de serrage de selle de bicyclette

(43) Date of publication of application: 16.04.2014
(73) Proprietor: MERIDA INDUSTRY CO., LTD., Meei Gaang Tsuen Ta Tsuen Chang Hwa Hsien (TW)
(72) Inventor: Lai, Jason, CHANGHUA HSIEN (TW)
(74) Representative: Dossmann, Gérard

(56) References cited:
- EP-A2- 1 798 140
- CH-A- 350 888
- DE-U1-202006 019 019
- FR-A1- 2 793 760
- US-A1- 2005 225 132

## Description

The present invention relates to a clamping apparatus, and more particularly relates to a clamping apparatus that can be clamped with saddles of different sizes for a bicycle conveniently without preparing another clamping apparatus to reduce the cost of using the clamping apparatus.

Document DE 20 2006 019 019 U describes a clamping apparatus for a saddle with two clamping mounts adapted to abut the side faces of a seat post and two clamping elements engaging said clamping mounts.

### 2. Description of Related Art

Bicycles have become more and more popular in recent years. As well-known, a bicycle virtually causes no environmental pollution, so the benefits are obvious to a world facing serious contamination. Therefore, there are various kinds of bicycles developed and the components of the bicycle are improved quickly.

The bicycle usually has a conventional clamping apparatus mounted between a seat post and a saddle of the bicycle to enable a user to change the saddles of different sizes according to the user's need. The saddle usually has two connecting pipes of two different sizes (7 millimeter × 7 millimeter circular pipe and 7 millimeter × 9 millimeter elliptical pipe). However, the conventional clamping apparatus can only be used to clamp one of the connecting pipes of the two sizes for the saddle. Therefore, when the user wants to change a new saddle of a different size, the user may need to prepare another conventional clamping apparatus to clamp the new saddle and this will increase the cost of using the conventional clamping apparatus.

Furthermore, the conventional clamping apparatus clamps the saddle by a transverse clamping force or a longitudinal clamping force to abut against the connecting pipes of the saddle. However, the transverse clamping force or the longitudinal clamping force that is provided by the conventional clamping apparatus is not strong enough to resist the shocking force that is provided from the ground while riding. Then, the saddle cannot be securely clamped on the seat post of the bicycle by the conventional clamping apparatus and may move or slide relative to the seat post.

Therefore, the present invention provides a clamping apparatus for a saddle of a bicycle to mitigate or obviate the aforementioned problems.

The main objective of the present invention is to provide a clamping apparatus that can be clamped with saddles of different sizes of a bicycle conveniently without preparing another clamping apparatus to reduce the cost of using the clamping apparatus.

The clamping apparatus for a saddle of a bicycle in accordance with the present invention has two clamping mounts, two clamping elements and two fasteners. Each clamping mount has a holding recess, two elongated through holes and a clamping block. The clamping block is formed on and protrudes from an outer side of the clamping mount at a bottom and has an abutment face. The clamping elements are respectively and detachably mounted in the clamping mounts between the holding recesses and the clamping blocks, and each clamping element has a top clamping recess, a bottom clamping recess, a top abutting recess and a bottom abutting recess. The clamping recesses selectively face the holding recess of a corresponding clamping mount. The abutting recesses selectively abut against the clamping block of the corresponding clamping mount. The fasteners are respectively connected to the clamping elements and the clamping mounts.

Other objectives, advantages and novel features of the invention will become more apparent from the following detailed description when taken in conjunction with the accompanying drawings.
Fig. 1 is a side view of a clamping apparatus for a saddle of a bicycle in accordance with the present invention connected between a saddle and a seat post;
Fig. 2 is an enlarged perspective view of the clamping apparatus in Fig. 1 connected between two connecting pipes of the saddle and the seat post;
Fig. 3 is an exploded perspective view of the clamping apparatus in Fig. 2 connected between two connecting pipes of the saddle and the seat post;
Fig. 4 is a front view of the clamping apparatus in Fig. 1 clamping a saddle with the connecting pipes of a large size on the seat post;
Fig. 5 shows operational perspective views of the clamping apparatus in Fig. 1 to clamp a saddle with two connecting pipes of a smaller size of on a seat post; and
Fig. 6 is another front view of the clamping apparatus in Fig. 1 clamping a saddle with the connecting pipes of a smaller size on the seat post.

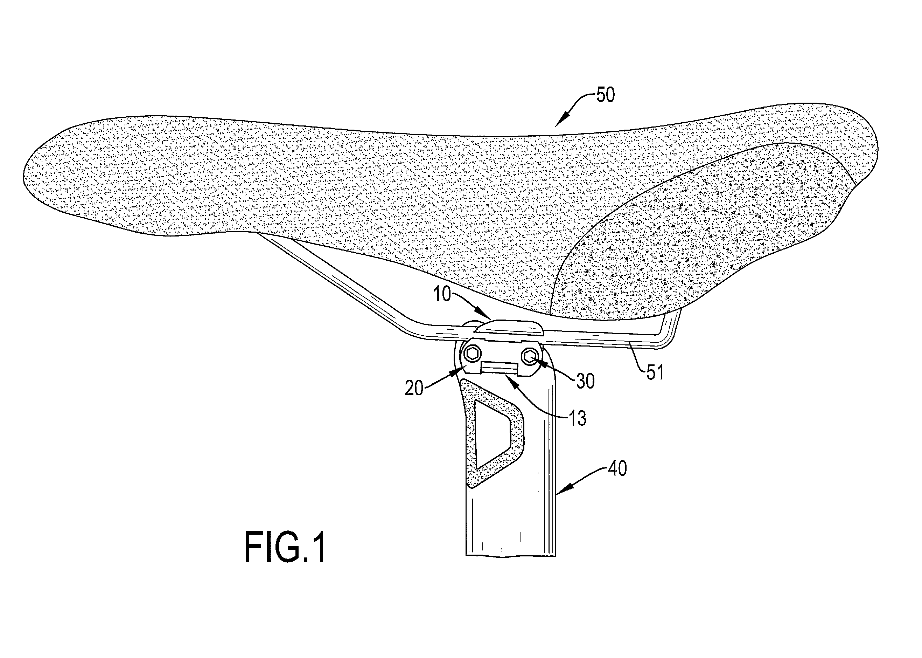

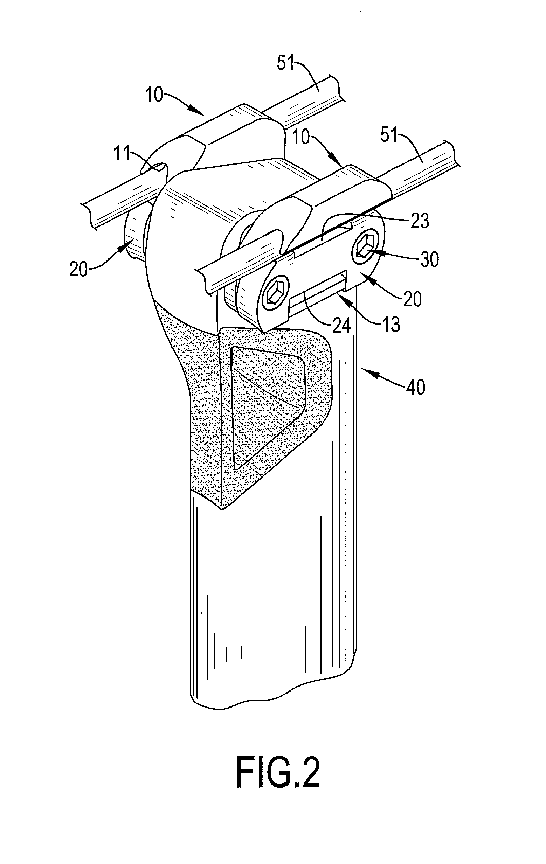

With reference to Figs. 1 to 3, a clamping apparatus in accordance with the present invention for a saddle 50 of a bicycle comprises two clamping mounts 10, two clamping elements 20 and two fasteners 30. The saddle 50 has two connecting pipes 51 (7 millimeter × 9 millimeter). The bicycle has a seat post 40. The seat post 40 has two side faces and two connecting holes 41 defined through the side faces of the seat post 40.

The clamping mounts 10 respectively abut the side faces of the seat post 40, and each clamping mount 10 has a top, a bottom, an outer side, a top face, a holding recess 11, two elongated through holes 12 and a clamping block 13. The top face is formed curved on and protrudes downwardly from the outer side of the clamping mount 10 at the top of the clamping mount 10 to form the holding recess 11. The elongated through holes 12 are formed through the outer side of the clamping mount 10 at an interval and respectively align with the connecting holes 41 of the seat post 40. The clamping block 13 is wedge-shaped, is formed on and protrudes from the outer side of the clamping mount 10 at the bottom of the clamping mount 10 between the elongated through holes 12 and has a top and an abutment face 131. The abutment face 131 is formed aslant on and protrudes downwardly from the top of the clamping block 13.

The clamping elements 20 may be a first clamping element 20 and a second clamping element 20, are respectively and detachably mounted in the clamping mounts 10 between the holding recesses 11 and the clamping blocks 13, and each clamping element 20 may be I-shaped and has a top, a bottom, a middle, a top clamping recess 21, a bottom clamping recess 22, a top abutting recess 23 and a bottom abutting recess 24. The top clamping recess 21 is curved, is formed on the top of the clamping element 20 and selectively faces the holding recesses 11 of a corresponding clamping mount 10. The bottom clamping recess 22 is curved, is formed on the bottom of the clamping element 20 and selectively faces the holding recesses 11 of the corresponding clamping mount 10.

The top abutting recess 23 is formed aslant through the middle of the top of the clamping element 20, communicates with the top clamping recess 21 and selectively abuts against the clamping block 13 of the corresponding clamping mount 10 and has a depth. The bottom abutting recess 24 is formed aslant through the middle of the bottom of the clamping element 20, communicates with the bottom clamping recess 22 and selectively abuts against the clamping block 13 of the corresponding clamping mount 10 and has a depth. The depth of the bottom abutting recess 24 is deeper than the depth of the top abutting recess 23.

In addition, the first clamping element 20 has two fixing holes 25 formed through the first clamping element 20 and respectively aligning with the elongated through holes 12 of the clamping mounts 10 and the connecting holes 41 of the seat post 40, and the second clamping element 20 has two mounting holes 26 formed through the clamping element 20 and respectively aligning with the elongated through holes 12 of the clamping mounts 10, the connecting holes 41 of the seat post 40 and the fixing holes 25 of the first clamping element 20.

The fasteners 30 are respectively connected to the clamping elements 20 and the clamping mounts 10. The fasteners 30 are respectively mounted in the mounting holes 26 of the second clamping element 20, are mounted through the elongated through holes 12 of the clamping mounts 10 and the connecting holes 41 of the seat post 40 and are securely connected to the fixing holes 25 of the first clamping element 20 to connect the clamping elements 20 and the clamping mounts 10 with the seat post 40.

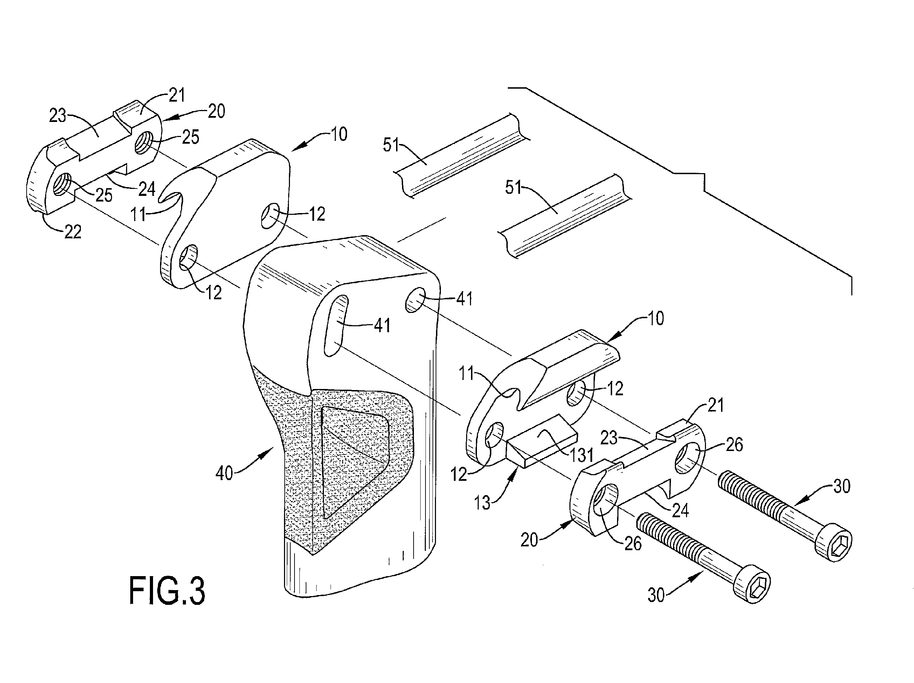

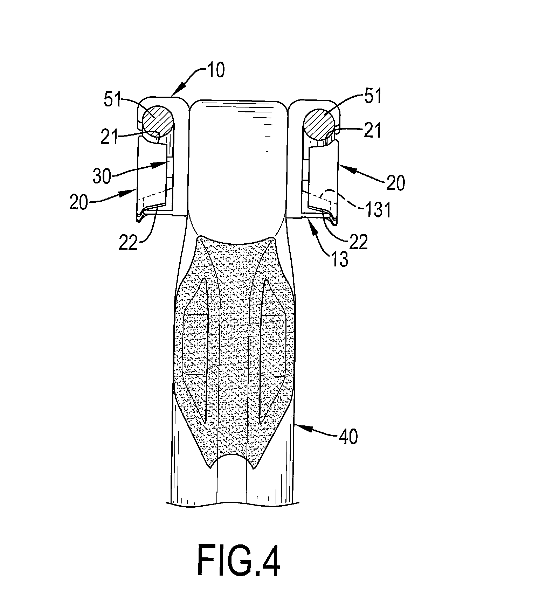

With reference to Figs. 1 and 3, the clamping apparatus in accordance with the present invention is used to clamp a saddle 50 with two connecting pipes 51 of a large size (7 millimeter × 9 millimeter). The fasteners 30 are loosened from the clamping elements 20 to detach the clamping elements 20 respectively from the clamping mounts 10. The connecting pipes 51 of the saddle 50 are respectively mounted in the clamping mounts 10 between the holding recesses 11 and the clamping blocks 13. The clamping elements 20 are respectively mounted in the clamping mounts 10 to enable the bottom abutting recesses 24 to respectively abut against the abutment faces 131 of the clamping blocks 13. Then, the clamping elements 20 will move aslant and upwardly respectively relative to the clamping mounts 10 by the abutment faces 131 of the clamping blocks 13 to enable the top clamping recesses 21 to respectively face the holding recesses 11 of the clamping mounts 10 and to respectively abut against the connecting pipes 51 of the saddle 50. When the fasteners 30 are respectively mounted through the mounting holes 26 of the second clamping element 20, the elongated through holes 12 of the clamping mounts 10, and the connecting holes 41 of the seat post 40 and are securely connected to the first clamping element 20 via the fixing hole 25, the clamping elements 20 respectively abut against the connecting pipes 51 by a transverse clamping force and a longitudinal clamping force that are formed by the bottom abutting recesses 24 respectively abutting against the abutment faces 131 of the clamping blocks 13. In addition, because the depths of the bottom abutting recesses 24 are deeper than the depths of the top abutting recesses 23 of the clamping elements 20, the distances between the top clamping recesses 21 and the holding recesses 11 of the clamping mounts 10 can be used to clamp the connecting pipes 51 of a large size (7millimeter×9millimeter) as shown in Fig. 4.

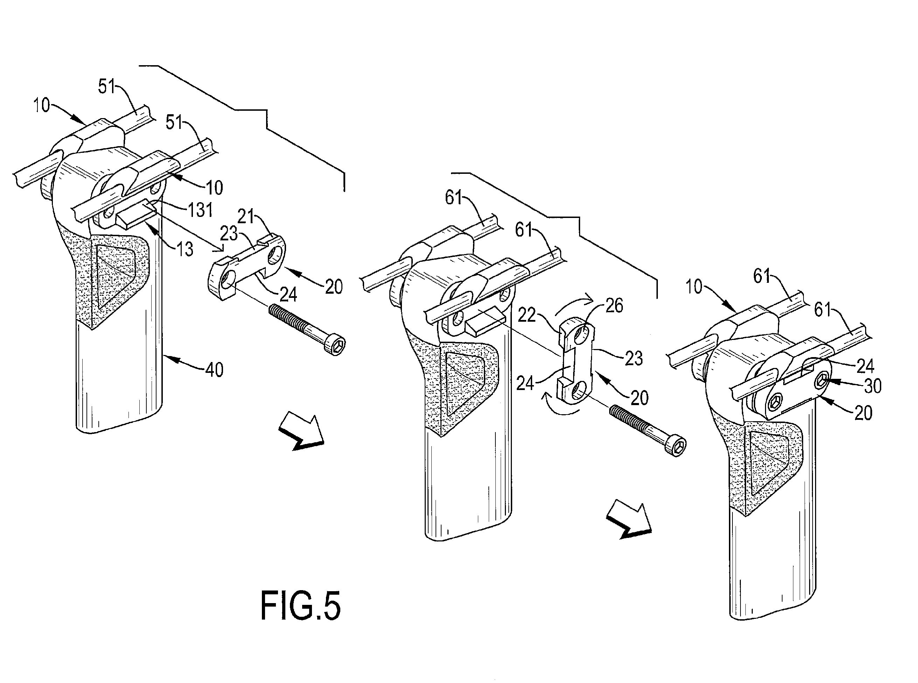

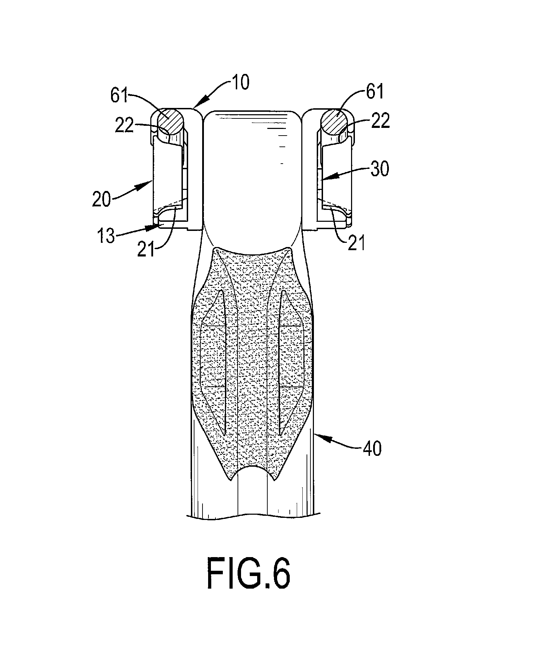

With further reference to Fig. 5, the clamping apparatus in accordance with the present invention is used to clamp a saddle with connecting pipes 61 of a small size (7 millimeter × 7 millimeter). The fasteners 30 are loosened from the clamping elements 20 to detach the clamping elements 20 respectively from the clamping mounts 10 and to remove the connecting pipes 51 of a large size respectively from the clamping mounts 10. Then, the connecting pipes 61 of a small size are respectively mounted in the clamping mounts 10 between the holding recesses 11 and the clamping blocks 13. The clamping elements 20 are respectively rotated by 180 degrees and are mounted in the clamping mounts 10 to enable the top abutting recesses 23 to respectively abut against the abutment faces 131 of the clamping blocks 13. Then, the clamping elements 20 will move aslant and upwardly respectively relative to the clamping mounts 10 by the abutment faces 131 of the clamping blocks 13 to enable the bottom clamping recesses 22 to respectively face the holding recesses 11 of the clamping mounts 10 and to respectively abut against the connecting pipes 61 of a small size. When the fasteners 30 are respectively mounted through the mounting holes 26 of the second clamping element 20, the elongated through holes 12 of the clamping mounts 10, and the connecting holes 41 of the seat post 40 and are securely connected to the fixing holes 25 of the first clamping element 20, the clamping elements 20 respectively abuts against the connecting pipes 61 by a transverse clamping force and a longitudinal clamping force that are formed by the top abutting recesses 23 respectively abutting against the abutment faces 131 of the clamping blocks 13. In addition, because the depths of the top abutting recesses 23 are not deeper than the depths of the bottom abutting recesses 24 of the clamping elements 20, the distances between the bottom clamping recesses 22 and the holding recesses 11 of the clamping mounts 10 can be used to clamp the connecting pipes 61 of a small size (7 millimeter×7 millimeter) as shown in Fig. 6.

According to the above-mentioned features, the clamping apparatus in accordance with the present invention can be used to clamp connecting pipes 51, 61 of different sizes (7 millimeter×9 millimeter and 7 millimeter×7 millimeter, respectively) by rotating the clamping elements 20 to enable the bottom abutting recesses 24 or the top abutting recesses 23 to abut against the abutment faces 131 of the clamping blocks 13. Because the depths of the bottom abutting recesses 24 are deeper than the depths of the top abutting recesses 23, the distances between the top clamping recesses 21 and the holding recesses 11 are larger than the distances between the bottom clamping recesses 22 and the holding recesses 11. Then, the connecting pipes 51 of a large size can be clamped between the top clamping recesses 21 of the clamping elements 20 and the holding recesses 11 of the clamping mounts 10 as shown in Fig. 4 and the connecting pipes 61 of a small size can be clamped between the bottom clamping recesses 22 of the clamping elements 20 and the holding recesses 11 of the clamping mounts 10 as shown in Fig. 6. Therefore, the clamping apparatus in accordance with the present invention can be used to clamp connecting pipes 51, 61 of different sizes without the need to prepare another clamping apparatus, and this is convenient in use and can reduce the cost of using the clamping apparatus.

Furthermore, the abutment faces 131 are formed aslant on and protrude downwardly from the tops of the clamping blocks 13, and the top abutting recesses 23 and the bottom abutting recesses 24 selectively abut against the abutment faces 131 of the clamping blocks 13. Accordingly, the clamping elements 20 can provide a transverse clamping force and a longitudinal clamping force to the connecting pipes 51, 61. Then, the transverse clamping force and the longitudinal clamping force that are provided by the clamping elements 20 are strong enough to resist the shocking force that is provided from the ground while riding, and the saddle 50 can be securely clamped on the seat post 40 of the bicycle by the clamping apparatus in accordance with the present invention to prevent the saddle 50 from moving or sliding relative to the seat post 40.

## Claims

1. A clamping apparatus for a saddle (50) of a bicycle having a seat post (40) with two side faces, and **characterized in that** the clamping apparatus comprises:
two clamping mounts (10) being adapted to respectively abut the side faces of the seat post (40), and each clamping mount (10) having:
a top;
a bottom;
an outer side;
a top face formed curved on and protruding downwardly from the outer side of the clamping mount (10) at the top of the clamping mount (10) to form a holding recess (11);
two elongated through holes (12) formed through the outer side of the clamping mount (10) at an interval; and
a clamping block (13) formed on and protruding from the outer side of the clamping mount (10) at the bottom of the clamping mount (10) between the elongated through holes (12) and having:
a top; and
an abutment face (131) formed aslant on and protruding from the top of the clamping block (13);
two clamping elements (20) respectively and detachably mounted in the clamping mounts (10) between the holding recesses (11) and the clamping blocks (13), and each clamping element (20) having:
a top;
a bottom;
a middle;
a top clamping recess (21) formed in the top of the clamping element (20) and selectively facing the holding recesses (11) of a corresponding clamping mount (10);
a bottom clamping recess (22) formed in the bottom of the clamping element (20) and selectively facing the holding recesses (11) of the corresponding clamping mount (10);
a top abutting recess (23) formed aslant through the middle of the clamping element (20) at the top of the clamping element (20), communicating with the top clamping recess (21) and selectively abutting against the clamping block (13) of the corresponding clamping mount (10) and having a depth; and
a bottom abutting recess (24) formed aslant through the middle of the clamping element (20) at the bottom of the clamping element (20), communicating with the bottom clamping recess (22) and selectively abutting against the clamping block (13) of the corresponding clamping mount (10) and having a depth being deeper than the depth of the top abutting recess (23); and
two fasteners (30) respectively connected to the clamping elements (20) and the clamping mounts (10) to connect the clamping elements (20) and the clamping mounts (10) with the seat post (40) to clamp the saddle (50).

2. The clamping apparatus for a saddle of a bicycle as claimed in claim 1, wherein the clamping block (13) of each one of the clamping mounts (10) is wedge-shaped and the abutment face (131) of the clamping block (13) is formed aslant on and protrudes downwardly from the top of the clamping block (13).

3. The clamping apparatus for a saddle of a bicycle as claimed in claim 2, wherein
the clamping elements (20) are respectively a first clamping element (20) and a second clamping element (20);
the first clamping element (20) has two fixing holes (25) formed through the first clamping element (20) and respectively aligning with the elongated through holes (12) of the clamping mounts (10);
the second clamping element (20) has two mounting holes (26) formed through the clamping element (20) and respectively aligning with the elongated through holes (12) of the clamping mounts (10) and the fixing holes (25) of the first clamping element (20); and
the fasteners (30) are respectively mounted in the mounting holes (26) of the second clamping element (20), are mounted through the elongated through holes (12) of the clamping mounts (10) and the seat post (40) and are securely connected to the fixing holes (25) of the first clamping element (20) to connect the clamping elements (20) and the clamping mounts (10) with the seat post (40).

4. The clamping apparatus for a saddle of a bicycle as claimed in claim 3, wherein each clamping element (20) is I-shaped.

5. The clamping apparatus for a saddle of a bicycle as claimed in claim 1, wherein
the clamping elements (20) are respectively a first clamping element (20) and a second clamping element (20);
the first clamping element (20) has two fixing holes (25) formed through the first clamping element (20) and respectively aligning with the elongated through holes (12) of the clamping mounts (10);
the second clamping element (20) has two mounting holes (26) formed through the clamping element (20) and respectively aligning with the elongated through holes (12) of the clamping mounts (10) and the fixing holes (25) of the first clamping element (20); and
the fasteners (30) are respectively mounted in the mounting holes (26) of the second clamping element (20), are mounted through the elongated through holes (12) of the clamping mounts (10) and the seat post (40) and are securely connected to the fixing holes (25) of the first clamping element (20) to connect the clamping elements (20) and the clamping mounts (10) with the seat post (40).

6. The clamping apparatus for a saddle of a bicycle as claimed in claim 1 or 2 or 5, wherein each clamping element (20) is I-shaped.

## Patentansprüche

1. Klemmvorrichtung für einen Fahrradsattel (50) mit einer Sattelstütze (40) mit zwei Seitenflächen und **gekennzeichnet dadurch, dass** die Klemmvorrichtung umfasst:
zwei Klemmhalterungen (10), welche ausgelegt sind, um jeweils an den Seitenflächen der Sattelstütze (40) anzuliegen, und wobei jede Klemmhalterung (10) aufweist:
eine Oberseite;
eine Unterseite;
eine Außenseite;
eine obere Fläche, welche gebogen auf und vorspringend nach unten von der Außenseite der Klemmhalterung (10) an der Oberseite der Klemmhalterung (10) ausgeformt ist, um eine Haltevertiefung (11) auszubilden;
zwei Längsdurchgangsbohrungen (12), welche durch die Außenseite der Klemmhalterung (10) in einem Abstand zueinander ausgebildet sind; und
einen Klemmblock (13), welcher auf der Außenseite der Klemmvorrichtung (10) und von dieser vorspringend an der Unterseite der Klemmvorrichtung (10) zwischen den Längsdurchgangsbohrungen (12) ausgebildet ist und aufweist:
eine Oberseite; und
eine Aufstandsfläche (131), welche abgeschrägt und vorspringend auf der der Oberseite des Klemmblocks (13) ausgebildet ist;
zwei Klemmelemente (20), welche jeweils entsprechend und abnehmbar in den Klemmhalterungen (10) zwischen den Haltevertiefungen (11) und den Klemmblöcken (13) angebracht sind und wobei jedes Klemmelement (20) aufweist:
eine Oberseite;
eine Unterseite;
einen Mittelteil;
eine oberseitige Klemmvertiefung (21), welche auf der Oberseite des Klemmelements (20) ausgebildet ist und ausgewählt den Haltevertiefungen (11) einer entsprechend zugeordneten Klemmhalterung (10) zugewandt ist;
eine unterseitige Klemmvertiefung (22), welche auf der Unterseite des Klemmelements (20) ausgebildet ist und ausgewählt den Haltevertiefungen (11) einer entsprechend zugeordneten Klemmhalterung (10) zugewandt ist;
eine oberseitige Anschlussvertiefung (23), welche abgeschrägt durch die Mitte des Klemmelements (20) auf der Oberseite des Klemmelements (20) ausgebildet ist, in Verbindung mit der oberen Klemmvertiefung (21) steht und ausgewählt gegen den Klemmblock (13) der entsprechend zugeordneten Klemmhalterung (10) stößt und eine Tiefe aufweist; und
eine unterseitige Anschlussvertiefung (24), welche abgeschrägt durch die Mitte des Klemmelements (20) auf der Unterseite des Klemmelements (20) ausgebildet ist, in Verbindung mit der unteren Klemmvertiefung (22) steht und ausgewählt gegen den Klemmblock (13) der entsprechend zugeordneten Klemmhalterung (10) stößt und eine Tiefe aufweist, welche tiefer ist als die Tiefe der oberseitigen Anschlussvertiefung (23); und
zwei Befestigungsmittel (30), welche jeweils entsprechend mit den Klemmelementen (20) und den Klemmhalterungen (10) verbunden sind, um die Klemmelemente (20) und die Klemmhalterungen (10) mit der Sattelstütze (40) zu verbinden, um den Fahrradsattel (50) zu klemmen.

2. Klemmvorrichtung für einen Fahrradsattel nach Anspruch 1, wobei der Klemmblock (13) jeder der Klemmhalterungen (10) keilförmig ist und wobei die Anschlussfläche (131) des Klemmblocks (13) abgeschrägt auf der der Oberseite des Klemmblocks (13) ausgebildet ist und von dieser nach unten vorspringt.

3. Klemmvorrichtung für einen Fahrradsattel nach Anspruch 2, wobei
die Klemmelemente (20) jeweils ein erstes Klemmelement (20) und ein zweites Klemmelement (20) sind;
das erste Klemmelement (20) zwei Befestigungsbohrungen (25) aufweist, welche durch das erste Klemmelement (20) hindurch ausgebildet sind und sich jeweils mit den Längsdurchgangsbohrungen (12) der Klemmhalterungen (10) fluchten lassen;
das zweite Klemmelement (20) zwei Befestigungsbohrungen (26) aufweist, welche durch das Klemmelement (20) hindurch ausgebildet sind und sich jeweils mit den Längsdurchgangsbohrungen (12) der Klemmhalterungen (10) und den Befestigungsbohrungen (25) des ersten Klemmelements (20) fluchten lassen; und
die Befestigungsmittel (30) jeweils in den Befestigungsbohrungen (26) des zweiten Klemmelements (20) eingesetzt sind, durch die Längsdurchgangsbohrungen (12) der Klemmhalterungen (10) und der Sattelstütze (40) eingesetzt sind und fest mit den Befestigungsbohrungen (25) des ersten Klemmelements (20) verbunden sind, um die Klemmelemente (20) und die Klemmhalterungen (10) mit der Sattelstütze (40) zu verbinden.

4. Klemmvorrichtung für einen Fahrradsattel nach Anspruch 3, wobei jedes Klemmelement (20) I-förmig ist.

5. Klemmvorrichtung für einen Fahrradsattel nach Anspruch 1, wobei
die Klemmelemente (20) jeweils ein erstes Klemmelement (20) und ein zweites Klemmelement (20) sind;
das erste Klemmelement (20) zwei Befestigungsbohrungen (25) aufweist, welche durch das erste Klemmelement (20) hindurch ausgebildet sind und sich jeweils mit den Längsdurchgangsbohrungen (12) der Klemmhalterungen (10) fluchten lassen;
das zweite Klemmelement (20) zwei Befestigungsbohrungen (26) aufweist, welche durch das Klemmelement (20) hindurch ausgebildet sind und sich jeweils mit den Längsdurchgangsbohrungen (12) der Klemmhalterungen (10) und den Befestigungsbohrungen (25) des ersten Klemmelements (20) fluchten lassen; und
die Befestigungsmittel (30) jeweils in den Befestigungsbohrungen (26) des zweiten Klemmelements (20) eingesetzt sind, durch die Längsdurchgangsbohrungen (12) der Klemmhalterungen (10) und der Sattelstütze (40) eingesetzt sind und fest mit den Befestigungsbohrungen (25) des ersten Klemmelements (20) verbunden sind, um die Klemmelemente (20) und die Klemmhalterungen (10) mit der Sattelstütze (40) zu verbinden.

6. Klemmvorrichtung für einen Fahrradsattel nach Anspruch 1 oder 2 oder 5, wobei jedes Klemmelement (20) I-förmig ist.

## Revendications

1. Dispositif de serrage pour une selle (50) d'une bicyclette ayant une tige de selle (40) à deux faces latérales, et **caractérisé en ce que** le dispositif de serrage comprend :
deux supports de serrage (10) adaptés pour venir en appui respectivement sur les faces latérales de la tige de selle (40), et chaque support de serrage (10) ayant :
une partie supérieure ;
une partie inférieure ;
un côté extérieur ;
une face supérieure formée de façon courbée sur et faisant saillie vers le bas depuis le côté extérieur du support de serrage (10) au sommet du support de serrage (10) pour former un évidement de maintien (11) ;
deux trous traversants allongés (12) qui traversent le côté extérieur du support de serrage (10) avec un intervalle ; et
un bloc de serrage (13) formé sur et faisant saillie depuis le côté extérieur du support de serrage (10), dans la partie inférieure du support de serrage (10), entre les trous traversants allongés (12) et comportant :
une partie supérieure ; et
une face d'appui (131) formée en oblique sur et faisant saillie depuis le sommet du bloc de serrage (13) ;
deux éléments de serrage (20) respectivement montés de façon démontable dans les supports de serrage (10) entre les évidements de maintien (11) et les blocs de serrage (13), et chaque élément de serrage (20) comportant :
une partie supérieure ;
une partie inférieure ;
une partie médiane ;
un évidement de serrage supérieur (21) formé au sommet de l'élément de serrage (20) et tourné sélectivement vers les évidements de maintien (11) d'un support de serrage (10) correspondant ;
un évidement de serrage inférieur (22) formé dans la partie inférieure de l'élément de serrage (20) et tourné sélectivement vers les évidements de maintien (11) du support de serrage (10) correspondant ;
un évidement d'appui supérieur (23) formé en oblique dans la partie médiane de l'élément de serrage (20) au sommet de l'élément de serrage (20), communiquant avec l'évidement de serrage supérieur (21) et venant en appui sélectivement contre le bloc de serrage (13) du support de serrage correspondant (10) et ayant une profondeur ; et
un évidement d'appui inférieur (24) formé en oblique dans la partie médiane de l'élément de serrage (20) dans la partie inférieure de l'élément de serrage (20), communiquant avec l'évidement de serrage inférieur (22) et venant en appui sélectivement contre le bloc de serrage (13) du support de serrage correspondant (10) et ayant une profondeur plus grande que la profondeur de l'évidement d'appui supérieur (23) ; et
deux éléments de fixation (30) connectés respectivement aux éléments de serrage (20) et aux supports de serrage (10) pour connecter les éléments de serrage (20) et les supports de serrage (10) avec la tige de selle (40) pour serrer la selle (50).

2. Dispositif de serrage pour une selle de bicyclette selon la revendication 1, dans lequel le bloc de serrage (13) de chacun des supports de serrage (10) est en forme de coin et la face d'appui (131) du bloc de serrage (13) est formée en oblique sur et fait saillie vers le bas depuis le sommet du bloc de serrage (13).

3. Dispositif de serrage pour une selle de bicyclette selon la revendication 2, dans lequel :
les éléments de serrage (20) sont respectivement un premier élément de serrage (20) et un deuxième élément de serrage (20) ;
le premier élément de serrage (20) a deux trous de fixation (25) formés à travers le premier élément de serrage (20) et s'alignant respectivement avec les trous traversants allongés (12) des supports de serrage (10) ;
le deuxième élément de serrage (20) a deux trous de montage (26) formés à travers l'élément de serrage (20) et s'alignant respectivement avec les trous traversants allongés (12) des supports de serrage (10) et les trous de fixation (25) du premier élément de serrage (20) ; et
les éléments de fixation (30) sont montés respectivement dans les trous de montage (26) du deuxième élément de serrage (20), passent dans les trous traversants allongés (12) des supports de serrage (10) et la tige de selle (40) et sont connectés de façon sécurisée aux trous de fixation (25) du premier élément de serrage (20) pour connecter les éléments de serrage (20) et les supports de serrage (10) avec la tige de selle (40).

4. Dispositif de serrage pour une selle de bicyclette selon la revendication 3, dans lequel chaque élément de serrage (20) est en forme de I.

5. Dispositif de serrage pour une selle de bicyclette selon la revendication 1, dans lequel :
les éléments de serrage (20) sont respectivement un premier élément de serrage (20) et un deuxième élément de serrage (20) ;
le premier élément de serrage (20) a deux trous de fixation (25) formés à travers le premier élément de serrage (20) et s'alignant respectivement avec les trous traversants allongés (12) des supports de serrage (10) ;
le deuxième élément de serrage (20) a deux trous de montage (26) formés à travers l'élément de serrage (20) et s'alignant respectivement avec les trous traversants allongés (12) des supports de serrage (10) et les trous de fixation (25) du premier élément de serrage (20) ; et
les éléments de fixation (30) sont montés respectivement dans les trous de montage (26) du deuxième élément de serrage (20), passent dans les trous traversants allongés (12) des supports de serrage (10) et la tige de selle (40) et sont connectés de façon sécurisée aux trous de fixation (25) du premier élément de serrage (20) pour connecter les éléments de serrage (20) et les supports de serrage (10) avec la tige de selle (40).

6. Dispositif de serrage pour une selle de bicyclette selon la revendication 1, 2 ou 5, dans lequel chaque élément de serrage (20) est en forme de I.
